Europäisches Patentamt

European Patent Office

Office européen des brevets

(19)

(11) Numéro de publication : **0 040 121**
**B1**

(12) ## FASCICULE DE BREVET EUROPÉEN

(45) Date de publication du fascicule du brevet :
05.10.83

(51) Int. Cl.³ : **F 01 L 13/00**, F 02 D 13/06

(21) Numéro de dépôt : **81400629.2**

(22) Date de dépôt : **21.04.81**

(54) **Dispositif culbuteur de soupape déconnectable.**

(30) Priorité : 08.05.80 FR 8010284
17.10.80 FR 8022235

(43) Date de publication de la demande :
18.11.81 Bulletin 81/46

(45) Mention de la délivrance du brevet :
05.10.83 Bulletin 83/40

(84) Etats contractants désignés :
**BE DE GB IT NL SE**

(56) Documents cités :
**BE A 875 099**
**CH A 264 716**
**FR A 2 115 631**
**FR A 2 311 179**
**FR A 2 341 045**
**GB A 529 075**
**US A 4 161 166**
**US A 4 188 933**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Chafflotte, Pierre**
**2, parc du Bearn**
**F-92000 Saint-Cloud (FR)**
Inventeur : **Guicherd, Christian**
**6, avenue du Pasteur-Martin-Luther-King**
**F-78230 Le Pecq (FR)**
Inventeur : **Saindon, Alain**
**91, avenue André-Morizet**
**F-92100 Boulogne Billancourt (FR)**

(74) Mandataire : **Colas, Jean-Pierre et al**
**8 et 10 Avenue Emile Zola**
**F-92109 Boulogne-Billancourt (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Dispositif culbuteur de soupape déconnectable

La présente invention se rapporte à un dispositif de culbuteur utilisable pour diminuer la consommation d'un véhicule à moteur à combustion interne comportant, en particulier, des cylindres disposés en V.

On connaît dans l'art antérieur de nombreux dispositifs se proposant de résoudre ce problème d'économie d'énergie. Dans certaines formes de réalisation, les moins onéreuses, les gaz d'échappement de l'air sont recyclés dans les cylindres mis hors service. L'inconvénient de ces systèmes réside dans le fait que le gain de consommation n'est pas appréciable. D'autres dispositifs plus efficaces sont conçus pour fermer relativement les soupapes d'admission des cylindres qu'on veut mettre hors service. Mais ces dispositifs sont en général de structure compliquée, donc de fabrication onéreuse.

Le brevet FR-A-2.311.179 présente un mécanisme de mise hors service d'une soupape comportant un culbuteur constitué de deux éléments en prise l'une avec l'autre, l'un de ces éléments commandant la soupape tandis que l'autre élément est commandé par l'arbre à came du moteur, et associés à des moyens de commande permettant de déconnecter ces éléments de culbuteur l'un de l'autre. De plus, l'élément de culbuteur commandant la soupape est conformé pour maintenir, dans l'état déconnecté du dispositif, cette soupape en position de fermeture.

La présente invention vise à obvier aux inconvénients des systèmes de la technique antérieure grâce à un dispositif simple du type précédent qui agit sur la fermeture des soupapes d'admission d'un cylindre, d'un groupe ou d'une rangée de cylindres.

A cet effet, l'invention a pour objet un dispositif de ce type qui est caractérisé en ce que l'élément de culbuteur commandant la soupape d'admission est monté à coulisse sur la rampe de culbuteur tandis que l'élément de culbuteur commandé par l'arbre à came est solidarisé axialement à ladite rampe tout en pouvant tourner d'un certain angle autour de cette dernière.

Suivant un mode particulier de réalisation de l'invention, il est également prévu, montés sur la rampe de culbuteur, des premiers moyens élastiques et des seconds moyens élastiques destinés à maintenir les éléments respectivement en contact avec la queue de soupape et l'arbre à came.

Suivant un mode particulier de réalisation de l'invention, les moyens de commande comportent deux vérins à fluide sous pression reliés l'un à l'autre par un circuit de tuyauterie pour fluide et alimentés à partir d'un réservoir commun, un des vérins étant destiné à être actionné à partir du véhicule pour actionner à son tour le second vérin qui commande la déconnexion du dispositif culbuteur, ces vérins étant en outre pourvus de moyens de rappel.

D'autres caractéristiques apparaîtront à la lecture de la description suivante de deux formes de réalisation non limitatives de dispositif de culbuteur, en se référant au dessin annexé dans lequel :

la figure 1 est une vue latérale d'un culbuteur selon la présente invention ;

la figure 2 est une vue selon la ligne A-A de la figure 1 ;

la figure 3 est une vue de dessus selon la ligne B-B de la figure 1 ;

la figure 4 est une vue du bout d'un détail d'un élément de culbuteur déconnectable selon l'invention ;

la figure 5 est une coupe longitudinale axiale d'une autre forme de réalisation des moyens de commande du dispositif de culbuteur déconnectable selon l'invention, et

la figure 6 est une vue de dessus d'un culbuteur déconnectable associé aux moyens de commande de la figure 5.

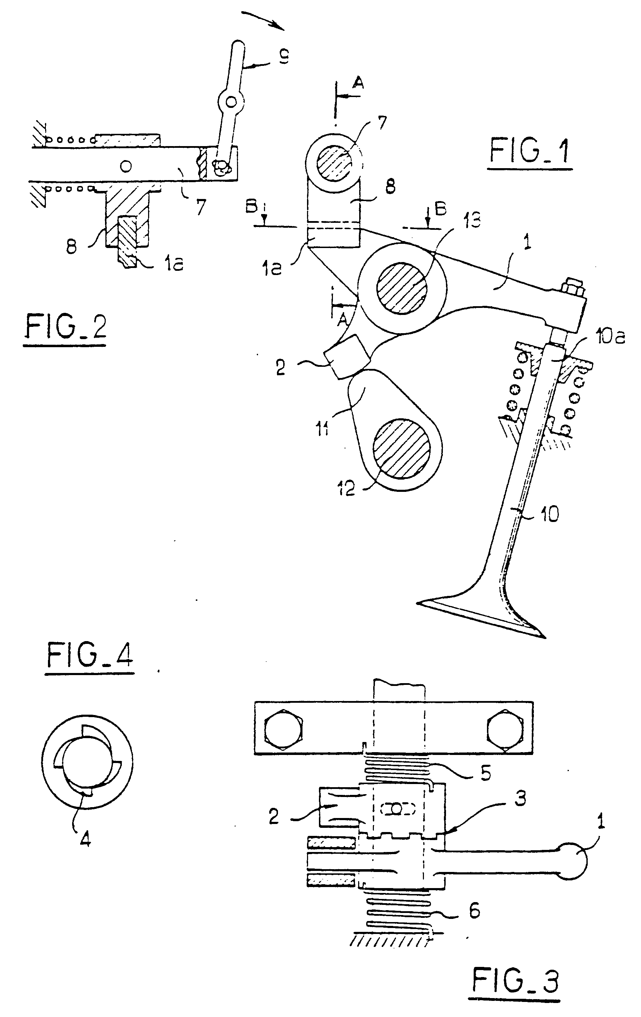

En se référant tout d'abord aux figures 1 à 4, le culbuteur selon l'invention est constitué de deux éléments 1, 2 en prise par leurs zones en regard entourant la rampe 13 de culbuteur. Ces zones en regard des éléments de culbuteur 1, 2 comportent respectivement des entraîneurs 3 et des rampes créneaux 4. L'élément de culbuteur 1 est monté à coulisse sur la rampe 13. Entre le palier et l'élément 2 du culbuteur est monté sur la rampe 13 un ressort spiral 5 destiné à maintenir le culbuteur 2 en appui sur la came 11 de l'arbre à came 12. Par des moyens classiques tels que des rainures et analogue, le culbuteur 2 est maintenu dans le sens axial tout en pouvant tourner d'un certain angle autour de la rampe ou l'arbre 13 de culbuteur. Au moyen d'un ressort 6, les éléments de culbuteur 1 et 2 sont maintenus en relation d'engagement, ce ressort 6 servant également à appuyer le culbuteur 1 sur la queue de soupape 10a. Un tel agencement évite un jeu entre l'élément de culbuteur 1 et la soupape d'admission 10. La queue 10a de cette soupape d'admission présente une surface d'extrémité suffisamment grande (on peut également prévoir d'y fixer une rondelle non représentée au dessin) afin que l'élément de culbuteur 1 soit toujours en appui sur la queue 10a de soupape, quelle que soit la position de l'élément 1 par rapport à l'élément 2 et notamment dans la position déconnectée de ces deux éléments constitutifs du culbuteur.

Pour déplacer l'élément de culbuteur 1 dans le sens axial sur sa rampe 13, on a prévu des moyens de commande constitués par une fourchette 8, montée solidement sur un arbre 7 dont le mouvement (donc celui de la fourchette) est commandé par le levier 9. Ceci implique que, dans le cas où plusieurs culbuteurs sont montés sur la rampe 13 pour mettre hors service autant de cylindres, il faut monter le même nombre de fourchettes sur l'arbre 7. Lorsqu'on veut inactiver un ou une rangée de cylindres, il suffit de déplacer le levier 9. Ce dernier peut être activé soit manuellement, soit par un système automatique lié à la puissance demandée au véhicule tracté par le moteur.

A l'état déconnecté, l'élément 1 de culbuteur tout en coulissant sur sa rampe 13 reste en appui sur la queue 10a de soupape, grâce à la configuration appropriée de cette dernière et maintient donc la soupape d'admission 10 fermée, tandis que l'élément 2 fixé axialement sur sa rampe 13 reste commandé par la came 11 de l'arbre 12, travaillant ainsi à vide.

Pour réengager les éléments 1 et 2, il suffit de faire cesser l'effort sur le levier 9 et la fourchette 8 solidarisée en 1a à l'élément 1 de culbuteur reprend sa position initiale et ramène ledit élément de culbuteur 1 en prise sur l'élément de culbuteur 2, ce qui réactive le cylindre par réouverture de la soupape d'admission.

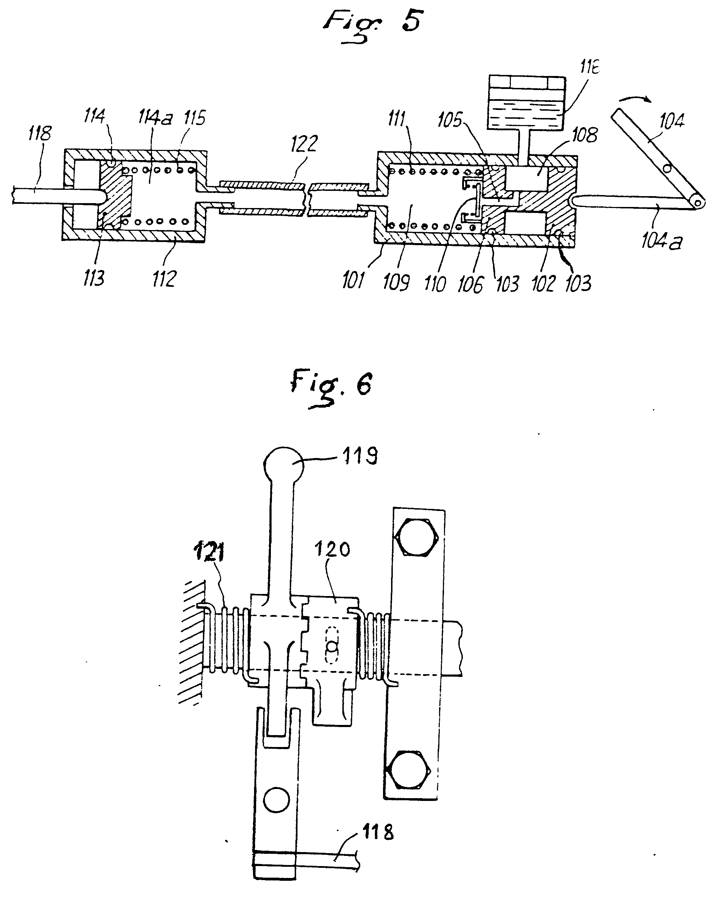

On se reportera maintenant aux figures 5 et 6 qui illustrent un autre mode de réalisation des moyens de commande du dispositif de culbuteur suivant l'invention.

Ces moyens de commande comprennent un cylindre hydraulique 101 disposé dans l'habitacle du véhicule et comportant un piston constitué de deux éléments 102 et 106. Sur chacun des éléments de piston est prévu un joint d'étanchéité 103. Ce piston est commandé par une tige-poussoir 104a reliée à pivotement par une extrémité à un levier de commande 104 et s'appuyant par son autre extrémité à la face externe de l'élément de piston 102. Dans ce piston constitué de deux éléments est ménagé un passage 105 qui permet au fluide de commande de passer du réservoir à fluide 116 dans la chambre 109. Sur l'élément de piston 106 est monté un clapet antiretour 110 de conception classique qui ne permet pas au fluide de passer de la chambre 109 dans la chambre 108, elle-même en communication avec le réservoir 116. La forme du clapet antiretour n'est pas critique, ce dernier pouvant être soit un disque, soit une bille, soit un cône, etc. Un ressort 111 est disposé entre le fond du cylindre et l'élément de piston 106.

Un cylindre hydraulique 112 monté dans le compartiment moteur comporte un piston 113 muni d'un joint d'étanchéité classique 114, un ressort 115 étant monté entre le fond du cylindre et le piston. La tige 118 qui commande le culbuteur déconnectable est connectée à la face concave du piston 113.

Les deux cylindres hydrauliques décrits ci-dessus sont alimentés en fluide visqueux, par exemple du liquide de freinage, et reliés par un tuyau flexible 122.

Pour les faibles charges de véhicule et pour diminuer la consommation, le conducteur tire le levier 104 dans le sens de la flèche indiquée sur le dessin. La tige 104a pousse les deux pistons 102 et 106 vers la gauche. Le clapet anti-retour 110 empêche le liquide de s'échapper par le passage 105. Le déplacement du liquide pousse ainsi le piston 113 du cylindre hydraulique 112 qui, à son tour, pousse la tige 118. L'élément de culbuteur 119 qui commande la soupape d'admission est ainsi déconnecté de l'élément de culbuteur 120 qui est commandé par l'arbre à came et, en conséquence, la soupape d'admission reste au repos sur son siège. Dans le cas d'un moteur dont les cylindres sont disposés en V, une rangée des cylindres n'est plus alimentée du fait que les soupapes d'admission respectives sont fermées. Donc l'économie de consommation est obtenue.

Si le conducteur a besoin d'une plus grande puissance du moteur, il pousse le levier 104 dans le sens inverse de la flèche du dessin. La tige 104a se déplace vers la droite. Par l'action du ressort 111, les deux éléments de piston 102 et 106 se déplacent vers la droite, le ressort 121 ayant été taré plus fort que le ressort 115 du cylindre hydraulique 112. L'élément de culbuteur 119 est enclenché sur l'élément de culbuteur 120. Le piston 113 se déplace vers la droite et comprime le ressort 115. La soupape d'admission commandée par le culbuteur 119 se remet à fonctionner. Dans un moteur dont les cylindres sont disposés en V, tous les cylindres se trouvent donc alimentés par l'ouverture des soupapes d'admission respectives, ce qui se traduit par l'obtention de la puissance normale du moteur.

Le diamètre du piston 113 peut être identique ou plus grand que celui du piston 106, selon le cas où l'on veut obtenir une force plus forte sur la tige 118.

Les joints d'étanchéité des pistons 103 et 114 sont de type classique, par exemple des joints à lèvre, des joints toriques et analogues. Au cas où se produirait une très légère fuite de fluide de commande, le réservoir 116 fournirait la quantité nécessaire. S'il se produit une perte de liquide par la chambre 108, l'appoint de fluide se ferait par gravité à partir du réservoir 116. S'il se produisait une perte dans les chambres 109 et 114a, lors du déplacement du piston 106 vers la droite, cela se traduirait par une dépression dans les chambres 109 et 114a, et le clapet anti-retour dont le ressort est de faible charge s'ouvrirait de façon à permettre à un appoint de fluide de commande de remplir à nouveau les chambres 109 et 114a. La commande du levier 104 peut être ainsi reliée par une timonerie appropriée à la pédale d'accélérateur de façon, aux faibles courses de la pédale, à maintenir déconnecté le culbuteur 119, tandis qu'aux fortes courses de la pédale le culbuteur 119 se trouverait avantageusement connecté. De cette façon, on peut faire fonctionner automatiquement le moteur, soit en économie de consommation, soit en puissance maximale.

Les moyens de commande conformes au mode de réalisation des figures 5 et 6 ont pour avantages d'offrir une force d'actionnement suffisamment forte pour déconnecter à coup sûr les deux éléments de culbuteur, de présenter une vitesse d'action suffisamment rapide pour que la déconnexion s'effectue de façon quasi instantanée et d'être d'une fiabilité élevée. Ils sont d'autre part moins onéreux que les dispositifs de commande électromagnétiques et électromécaniques qui nécessitent l'utilisation d'un bobinage développant une force de plusieurs décanewtons (daN). De ce qui précède, on voit que le dispositif de culbuteur décrit assure un gain de consommation réalisé par :

1) l'utilisation d'une rangée de cylindres lorsqu'une faible puissance est demandée au moteur, ce qui se traduit par un rendement thermodynamique élevé du moteur.

2) Une diminution de la boucle négative du cycle OTTO, du fait que les soupapes d'admission d'une rangée de cylindres sont fermées. Le travail de la création du vide dans les cylindres est récupéré lorsque les pistons remontent vers le point mort haut.

3) Une récupération de l'énergie qui aurait été nécessaire pour actionner les ressorts de rappel des soupapes d'admission maintenues fermées par l'élément de culbuteur 1.

Il est clair que l'invention n'est nullement limitée à la forme de réalisation de culbuteur décrite ci-dessus, mais qu'elle englobe toutes les modifications et variantes issues du même principe de base, à savoir la réalisation d'un culbuteur en deux éléments déconnectables, dont l'un est commandé par l'arbre à came, tandis que l'autre commande la soupape d'admission.

En outre, les moyens élastiques destinés à maintenir les éléments de culbuteur respectivement en contact avec la queue de soupape et l'arbre à came peuvent être des ressorts de n'importe quelle forme, appuyés ou accrochés aux éléments de culbuteurs.

## Revendications

1. Dispositif de culbuteur destiné à mettre hors service un cylindre, un groupe ou bien une rangée de cylindre d'un moteur à combustion interne en agissant sur la soupape d'admission, du type comportant au moins un culbuteur constitué de deux éléments (1, 2 ; 119, 120) en prise l'un avec l'autre, l'un de ces éléments (1, 119) commandant la soupape d'admission (10) du cylindre tandis que l'autre élément (2, 120) est commandé par l'arbre à came (12) du moteur, et associés à des moyens de commande (7, 9-101, 118) permettant de déconnecter ces éléments de culbuteurs l'un de l'autre, l'élément de culbuteur (1, 119) étant conformé pour maintenir, dans l'état déconnecté du dispositif, ladite soupape (10) en position de fermeture, dispositif caractérisé par le fait que l'élément de culbuteur (1, 119) commandant la soupape d'admission est monté à coulisse sur la rampe (13) de culbuteur tandis que l'élément de culbuteur (2, 120) commandé par l'arbre à came (12) est solidarisé axialement à ladite rampe (13) tout en pouvant tourner d'un certain angle autour de cette dernière.

2. Dispositif de culbuteur selon la revendication 1, caractérisé par le fait que sont montés sur la rampe de culbuteur des premiers moyens élastiques (6 ; 121) et des seconds moyens élastiques (5) destinés à maintenir les éléments (1, 119 ; 2, 120) respectivement en contact avec la queue (10a) de soupape (10) et l'arbre à came (11, 12).

3. Dispositif de culbuteur selon la revendication 1, caractérisé par le fait que lesdits moyens de commande comportent deux vérins (101, 112) à fluide sous pression reliés l'un à l'autre par un circuit de tuyauterie (122) pour fluide et alimentés à partir d'un réservoir commun (116), un des vérins (101) étant destiné à être actionné à partir du véhicule pour actionner à son tour le second vérin (112) qui commande la déconnexion du dispositif culbuteur, ces vérins étant en outre pourvus de moyens de rappel (111, 115).

4. Dispositif selon la revendication 3, caractérisé par le fait que les vérins sont des cylindres hydrauliques alimentés au moyen d'huile, du type liquide d'asservissement.

5. Dispositif selon la revendication 3, caractérisé par le fait que les vérins sont mis en action par commande à la main ou au pied.

6. Dispositif selon la revendication 3, caractérisé par le fait que les vérins sont mis en action automatiquement pour un régime donné du moteur.

7. Dispositif selon la revendication 3, caractérisé par le fait que l'un des vérins est disposé dans l'habitacle du véhicule tandis que l'autre est monté dans le compartiment moteur.

8. Dispositif selon l'une quelconque des revendications 3, 4 et 7, caractérisé par le fait que le vérin (101) disposé dans l'habitacle du véhicule comporte un piston constitué de deux éléments (102 et 106), un passage (105) permettant au fluide de commande de s'écouler du réservoir (116) dans la chambre de vérin (109) étant ménagé dans le corps dudit piston, tandis qu'un clapet anti-retour (110) est monté sur le passage (105) dans la zone où il débouche dans la chambre (109) par la face libre de l'élément de piston (106), la face libre de l'élément de piston (102) étant agencée pour recevoir une tige-poussoir d'actionnement des vérins (104a) connectée à un levier de commande (104), éventuellement relié à la pédale d'accélérateur.

9. Dispositif selon la revendication 3, caractérisé par le fait que le vérin (112) monté dans le compartiment moteur comporte un piston (113) dont la face libre est connectée à une tige de commande (118) actionnant le culbuteur déconnectable.

10. Dispositif selon la revendication 3, caractérisé par le fait que les moyens de rappel des vérins (101, 112) sont constitués respectivement par des ressorts (111, 115), le ressort de rappel (121) du dispositif déconnectable étant taré plus fort que le ressort (115) du vérin (112).

## Claims

1. A rocker arrangement intended for taking out of operation a cylinder, a group or a line of cylinders of an internal combustion engine by acting on the inlet valve, of the type comprising at least one rocker arm formed by two elements (1, 2 ; 119, 120) which are engaged with each other, one of said elements (1, 119) actuating the inlet valve (10) of the cylinder while the other element (2, 120) is actuated by the camshaft (12) of the engine, said elements being associated with actuating means (7, 9-101, 118) for disconnecting said rocker arm elements from each other, the rocker arm element (1, 119) being so shaped as to hold said valve (10) in the closed position, in the disconnected condition of the arrangement, characterised in that the rocker arm element (1, 119) for actuating the inlet valve is mounted slidably on the rocker shaft (13) while the rocker arm element (2, 120) actuated by the camshaft (12) is axially fixed to said rocker shaft (13) while being capable of rotating through a certain angle about said rocker shaft.

2. A rocker arrangement according to claim 1, characterised in that mounted on the rocker shaft are first resilient means (6 ; 121) and second resilient means (5) which are intended to hold the elements (1, 119 ; 2, 120) in contact respectively with the stem (10a) of the valve (10) and the camshaft (11, 12).

3. A rocker arrangement according to claim 1, characterised in that said actuating means comprise two pressure fluid jacks (101, 112) which are connected together by a fluid pipe circuit (122) and which are supplied from a common tank (116), one of the jacks (101) being intended to be actuated from the vehicle in turn to actuate the second jack (112) which causes disconnection of the rocker arrangement, said jacks also being provided with return means (111, 115).

4. An arrangement according to claim 3, characterised in that the jacks are hydraulic cylinders which are supplied by means of oil, of the liquid slave type.

5. An arrangement according to claim 3, characterised in that the jacks are actuated by hand or foot control.

6. An arrangement according to claim 3, characterised in that the jacks are operated automatically, for a given engine speed.

7. An arrangement according to claim 3, characterised in that one of the jacks is disposed in the passenger compartment of the vehicle while the other is mounted in the engine compartment.

8. An arrangement according to any one of claims 3, 4 and 7, characterised in that the jack (101) which is disposed in the passenger compartment of the vehicle comprises a piston formed by two elements (102, 106), a duct (105) for permitting the actuating fluid to flow the tank (116) into the jack chamber (109) being provided in the body of said piston, while a non-return valve (110) is mounted on the duct (105) in the region where it opens into the chamber (109) at the free face of the piston element (106), the free face of the piston element (102) being arranged to receive a jack actuating pushrod (104a) connected to an actuating lever (104), which is possibly connected to the accelerator pedal.

9. An arrangement according to claim 3, characterised in that the jack (112) mounted in the engine compartment comprises a piston (113), the free face of which is connected to an actuating rod (118) for actuating the disconnectible rocker arm.

10. An arrangement according to claim 3, characterised in that the return means of the jacks (101, 112) are respectively formed by springs (111, 115), the return spring (121) of the disconnectible arrangement being calibrated to be stronger than the spring (115) of the jack (112).

## Ansprüche

1. Vorrichtung zum Abschalten eines Ventilfallhebers zur Außerdienststellung eines, einer Gruppe oder einer Reihe von Zylindern eines Verbrennungsmotors durch Einwirkung auf das Einlaßventil, mit wenigstens einem Kipphebel, der aus zwei ineinandergreifenden Teilen, (1, 2, 119, 120) besteht, wobei eines der Teile (1, 119) das Einlaßventil (10) des Zylinders steuert, während das andere Teil (2, 120) von der Nockenwelle (12) des Motors gesteuert wird, und der mit Steuermitteln (7, 9-101, 118) zusammenwirkt, die ein Trennen der Kipphebelteile voneinander ermöglichen, wobei ein Kipphebelteil (1, 119) so ausgestaltet ist, daß es im getrennten Zustand der Vorrichtung das Ventil (10) in der Schließstellung hält, dadurch gekennzeichnet, daß das das Einlaßventil steuernde Teil (1, 119) des Kipphebels gleitbar an der Kipphebelwelle (13) angeordnet ist und daß das von der Nockenwelle (12) gesteuerte Teil (2, 120) des Kipphebels in axialer Richtung fest mit der Kipphebelwelle (13) verbunden ist und gleichzeitig um einen bestimmten Winkel um diese Welle drehbar ist.

2. Vorrichtung nach Anspruch 1, dadurch gekennzeichnet, daß an der Kipphebelwelle erste elastische Mittel (6, 121), und zweite elastische Mittel (5) angeordnet sind, um die Teile (1, 119 ; 2, 120) mit dem Ventilschaft (10a) des Ventils (10) bzw. der Nockenwelle (11, 12) in Berührung zu halten.

3. Vorrichtung nach Anspruch 1, dadurch gekennzeichnet, daß die Steuermittel zwei Druckfluid enthaltende Zylinder (101, 112) aufweisen, die miteinander über eine Rohrleitung (122) für das Fluid verbunden sind und von einem gemeinsamen Reservoir (116) gespeist werden, wobei einer der Zylinder (101) dazu dient, vom Fahrzeug betätigt zu werden um seinerseits den zweiten Zylinder (112) zu betätigen, der das Trennen der Kipphebelvorrichtung durchführt, wobei beide Zylinder außerdem mit Rückholvorrichtungen (111, 115) versehen sind.

4. Vorrichtung nach Anspruch 3, dadurch gekennzeichnet, daß die Zylinder Hydraulikzylinder sind, die mit einem Öl gespeist werden, der Art einer Servoflüssigkeit.

5. Vorrichtung nach Anspruch 3, dadurch gekennzeichnet, daß die Zylinder durch Hand- oder Fußbetätigung eingeschaltet werden.

6. Vorrichtung nach Anspruch 3, dadurch gekennzeichnet, daß die Zylinder automatisch durch einen vorgegebenen Motorzustand betätigt werden.

7. Vorrichtung nach Anspruch 3, dadurch gekennzeichnet, daß einer der Zylinder im Fahrgastraum angeordnet ist, während der andere im Motorraum angeordnet ist.

8. Vorrichtung nach einem der Ansprüche 3, 4 und 7, dadurch gekennzeichnet, daß der im Fahrgastraum des Fahrzeugs angeordnete Zylinder (101) einen Kolben aufweist, der aus zwei Teilen (102, 106) besteht, eine Öffnung (105) aufweist, so daß das Steuerfluid vom Reservoir (116) in die Zylinderkammer (109) fließen kann, die im Kolbenkörper vorgesehen ist, und daß ein Rückschlagventil (110) in der Öffnung (105), vorgesehen ist, in dem Bereich, in dem sie in die Kammer (109) durch die freie Fläche des Kolbenteils (106) mündet, wobei die freie Fläche des Kolbenteils (102) derart ausgestaltet ist, daß sie eine Zugstange zur Betätigung der Zylinder (104a) aufnehmen kann, die mit einem Steuerhebel (104) verbunden ist, der gegebenenfalls mit dem Gaspedal verbunden ist.

9. Vorrichtung nach Anspruch 3, dadurch gekennzeichnet, daß der im Motorraum angeordnete Zylinder (112) einen Kolben (113) aufweist, dessen freie Fläche mit einer Steuerstange (118) verbunden ist, die den trennbaren Kipphebel betätigt.

10. Vorrichtung nach Anspruch 3, dadurch gekennzeichnet, daß die Rückholvorrichtungen der Zylinder (101, 112) aus entsprechenden Federn (111, 115) bestehen, wobei die Rückholfeder (121) der trennbaren Vorrichtung eine größere Vorspannung aufweist als die Feder (115) des Zylinders (112).

FIG_1

FIG_2

FIG_4

FIG_3

Fig. 5

Fig. 6